# EUROPEAN PATENT SPECIFICATION

(11) **EP 2 047 905 B1**
(45) Date of publication and mention of the grant of the patent: **29.01.2020**
(21) Application number: 08253313.4
(22) Date of filing: 10.10.2008
(51) Int. Cl.: B01J 29/40, B01J 37/02, C10G 11/18

(54) **ADDITIVE FOR MAXIMIZING LIGHT OLEFINS IN FCC AND PROCESS FOR PREPARATION THEREOF**
ZUSATZSTOFF ZUR MAXIMIERUNG DER LEICHTEN OLEFINE WÄHREND FCC UND HERSTELLUNGSVERFAHREN DAFÜR
ADDITIF POUR MAXIMISER LES OLÉFINES LÉGÈRES EN FCC ET SON PROCÉDÉ DE PRÉPARATION

(30) Priority: 10.10.2007 BR PI0705179
(43) Date of publication of application: 15.04.2009
(73) Proprietor: Petróleo Brasileiro S.A. Petrobras, Rio de Janeiro, RJ (BR)
(72) Inventor: de Almeida, Marlon Brando Bezerra, Rio de Janeiro, RJ CEP: 22.421-020 (BR); Costa, Alexandre de Figueiredo, Rio de Janeiro, RJ CEP: 20.720-170 (BR); Lau, Lam Yiu, Rio de Janeiro, RJ CEP: 22.280-040 (BR); Mattos, Eliane Bernadete Castro, Rio de Janeiro, RJ CEP: 21.920-350 (BR); Rodrigues, Sergio Augusto Santos, Rio de Janeiro, RJ CEP: 21.710-300 (BR)
(74) Representative: J A Kemp LLP

(56) References cited:
- EP-A- 1 116 775
- EP-A- 1 878 491
- US-A1- 2005 227 853
- US-B1- 6 211 104

## Description

### Field of the invention

The present invention relates to the field of processes of fluid catalytic cracking (FCC). The invention teaches the application of additives for FCC catalysts, which selectively increase the production of liquefied petroleum gas (LPG) and light olefins. The invention provides an original method of preparation of catalytic compositions for fluid catalytic cracking.

### Background of the invention

The process of fluidized-bed catalytic cracking (FCC) is an important source of light hydrocarbons such as liquefied petroleum gas (LPG) and light olefins of high added value such as propene and isobutene among others. Propene, a basic raw material for petrochemical processes, is in ever increasing demand on the world market. It is desirable to obtain an increase in yield of these products by means of the FCC process, economically and with less impact on the environment.

At present, an increase in the content of LPG and olefins in the FCC process can be obtained by making changes in the operating conditions and by using new catalytic systems. It has been found in practice that increasing the severity of the reaction (by increasing the reaction temperature) or the catalyst/oil ratio results in an increase in the contents both of LPG and olefins. This concept has been widely investigated and published in the scientific literature. Reference may be made to the following works:
1) A. Aitani, T. Yoshikawa, T. Ino, Maximization of FCC light olefins by high severity operation and ZSM-5 addition. Catalysis Today, 90 (2000) 111-117;
2) J. W. Biswas and I.E. Maxwell, Octane Enhancement in Fluid Catalytic Cracking, I. Role of ZSM-5 Addition and Reactor Temperature, Applied Catal., 58 (1990) 1-18; 3)
3) J. W. Biswas and I.E. Maxwell, Octane Enhancement in Fluid Catalytic Cracking, II. Operation in the Overcracking Regime, Applied Catal., 58 (1990) 19-27.

The use of zeolite type ZSM-5 is also known in the prior art, whether incorporated in catalysts or added separately in the form of separate particles. The latter, normally applied in small proportions, is designated as additive. Naturally, the two options can be applied in combination. The literature relating to this subject, in addition to the article cited above, can be found in the publications:
1) F. Degnan, G.K. Chitnis, P.H. Schipper, History of ZSM-5 fluid cracking additive development at Mobil, Microporous and Mesoporous Materials, 35-36 (2000) 245-252; 2)
2) S.P. Donnelly, S. Mizzahi, P.T. Sparrel, A. Huss, Jr., P.H. Schipper and J.A. Herbst, How ZSM-5 works in FCC, Division of Petroleum Chemistry, ACS Meeting, August 30 - September 4, New Orleans, 1987;
3) A. S. Kishna, C.R. Hsieh, A.R. English, T.A. Picoraro, C.W. Kuehler, Additives improve FCC process, Hydrocarbon Processing, Nov. (1991) 59-66.

ZSM-5 is used successfully on a commercial scale, though its use at high contents leads to an increase in the costs of production of the additives. Moreover, its small pore diameter limits its direct action on the FCC charge, causing some dilution of the stock of catalyst and hence a decrease in conversion. Therefore it is highly desirable to obtain a catalytic system that leads to the desired products with the smallest possible amount of ZSM-5 incorporated.

There are various methods of preparation of additives for maximizing light olefins in the FCC process by incorporating zeolites that are selective for olefins, that form microspheres in various types of matrices. For examples, see patents US 5,286,369 (Grace), US 5,456,821 and US 5,888,378 (both of Mobil).

It is also quite well known that phosphorus compounds improve zeolite performance, as can be seen from patents US 4,564,091 (Exxon), US 4,605,637 and US 4,724,066 (both of Mobil) and in the work of F. Degnan et al. cited previously.

In addition to the use of phosphorus compounds, the scientific literature cites other types of treatment for improving zeolite performance or stability. In particular, the presence of alkaline-earth metals can increase the hydrothermal stability of zeolites, as taught in patent US 4,544,793 and the work of K. Fujisawa et al., The steam stability of H-ZSM-5 type zeolites containing alkaline earth metals, Bull. Chem. Soc. Japan, 60 (1987) 791-93.

Patent US 5,382,351 (Grace) teaches the preparation of additives M-ZSM-5 by ion exchange (M represents an alkaline-earth metal). The zeolites thus modified were tested mixed with a base catalyst, and improved the octane number of the gasoline, without any effect on the production of light olefins. The patent itself points out that the added alkaline-earth metals give a smaller increase in the yield of light olefins and smaller reduction of the yield of gasoline, in comparison with unmodified ZSM-5.

A more recent patent application, US 2005/0227853 A1, combined two sources with potential for improving the stability of zeolite ZSM-5. The additives were prepared in the presence of metals and phosphates, forming metal phosphates *in situ* in the spray-dried mixture. The metal phosphates used in this way improved the properties of abrasion resistance of the additives. Moreover, the additives containing phosphates of calcium and magnesium displayed performance in yield of light olefins poorer than the reference, containing only phosphate, without the presence of alkaline-earth metals.

It is obvious to a technician working in the area of catalyst manufacture that simply increasing one or more "stabilizers" or "activators" of the zeolite in a mixture for preparation of additives, such as phosphorus compounds and alkaline-earth metals, does not necessarily improve its activity in production of light olefins in typical conditions of FCC. The manner in which the components interact has a significant effect on the performance of the additive. To achieve adequate interaction between the zeolite and its modifier, the conditions of preparation must be optimized.

Zeolites must be treated with *ex*-*situ* methods, to improve their performance or stability before being incorporated in the form of microspheres.

In document EP 1116775 A1, zeolite ZSM-5 was mixed with a source of phosphate and the mixture was submitted to thermal treatment. This is a typical example of stabilization *ex-situ.* Use of the method of stabilization *ex-situ* has the clear objective of promoting interaction between the zeolite and its stabilizer or activator, thus reducing the possibility of interaction of this stabilizing reagent with the other components present in the composition of the additive or catalyst.

Patent US 6,211,104 (Sinopec) teaches the preparation of catalysts for the process of catalytic pyrolysis, a process that operates in far harsher conditions than the FCC process. In each preparation, zeolite type ZSM-5 was merely brought in contact with an aqueous solution of cations such as aluminium, calcium and magnesium, in the presence of phosphoric acid. The mixture was then dried and calcined at 450°C - 650°C, forming zeolite P-M-ZSM-5. Finally, zeolite P-M-ZSM-5 was mixed with binders and other components and additives for preparing the final particle, by the spray-drying process. This preparation can be regarded as activation *ex-situ* of zeolite ZSM-5 by phosphate of aluminium, calcium or magnesium. The catalysts thus obtained are sufficiently active to obtain light olefins in the process of catalytic pyrolysis, for conversion of light stock.

Moreover, methods of preparation of additives by stabilization *ex-situ* of the zeolite prior to its incorporation involve multiple stages, making the cost of production of the additive very high. Furthermore, formation of phosphate on the zeolite can cause agglomeration of the material, requiring additional stages of dispersion and grinding of the phosphate-treated zeolite. In addition, deposition of phosphate on the zeolite, followed by calcination at high temperature, can cause physical blocking of the pores in the zeolite, so that it becomes an inefficient method for preserving the active sites.

### Summary of the invention

The present invention relates to the field of processes of fluid catalytic cracking (FCC), which employ additives for maximizing liquefied petroleum gas (LPG) and light olefins, such as ethene, propene and butenes. The invention provides a process of preparation of these additives, which contain zeolites modified with phosphates and alkaline-earth metals, and display better performance than additives with the same compositions, prepared by other processes. Said process comprises stages of mixing and maturation, all in aqueous phase, prior to drying and forming of the mixture in the form of microspheres. Thus, said process is differentiated from other processes encountered in the prior art in that zeolite is submitted to the preferential action of modifying agents and additional treatments such as filtration, washing or calcination after the treatment with its activator are dispensed with.

The present invention thus provides a process for the production of additive for catalysts for fluid catalytic cracking (FCC), characterized in that it comprises the following stages:
1) provide a suspension of zeolite that is selective for light olefins;
2) bring a modifying agent, reagent "X", in contact with the suspension of zeolite that is selective for light olefins from step (1);
3) provide a hydrosol of inorganic oxide;
4) mix the hydrosol from step (3) with the zeolite suspension from step (2);
5) dry the suspension resulting from step (4) in a spray-dryer;
wherein said reagent "X" is an aqueous solution of cations of aluminium or of alkaline-earth metal in the presence of phosphate.

The present invention also provides an additive for catalysts for fluid catalytic cracking, characterized in that it is obtainable by a process according to the present invention.

### Detailed description of the invention

The present invention relates to additives for catalysts used in the process of fluid catalytic cracking (FCC), for selective production of liquefied petroleum gas (LPG) and light olefins. The invention provides a process of preparation of catalytic compositions (additives) that comprises the following stages:
1) provide a zeolite suspension that is selective for light olefins, preferably zeolites with a structure similar to that of zeolite ZSM-5, activated or unactivated;
2) add modifying agents (reagent "X") for maturation of said suspension, in conditions that promote interaction between the components of the suspension;
3) provide a hydrosol of inorganic oxide, typically of silica, alumina or silica-alumina, at controlled pH, which constitutes the matrix of the composite;
4) mix the hydrosol with the matured zeolite suspension (optionally, other components such as zeolite Y and inert material, such as kaolin, can also be added simultaneously to this mixture);
5) dry the suspension in a spray dryer;
6) optionally, carry out post-treatments such as washings and calcinations.

Reagent "X" is an aqueous solution of cations of aluminium or of alkaline-earth metal, preferably of calcium and magnesium, in the presence of phosphate.

The percentage by weight of phosphate relative to zeolite, expressed in the form of phosphorus pentoxide (P₂O₅), is up to 20%, preferably up to 15%, and more preferably up to 10%.

The percentage by weight of cations in the solution relative to zeolite, expressed in the form of oxide (for example, CaO and MgO), is up to 10%, more preferably up to 4%, and most preferably up to 2%.

The duration of contact between the zeolite that is selective for olefins and the modifying agent is between 0.25 hours and 10 hours, preferably between 0.5 hours and 4 hours.

The temperature for mixing the zeolite suspension with the modifying agent is between 10°C and 100°C, preferably between 30°C and 80°C.

The invention is a development in relation to other processes known in the prior art, as it promotes interaction between the zeolite that is selective for light olefins and its activator, reagent "X". For this, a separate stage is used during the sequence of stages in the preparation, before adding all the other components of the additive. This process is called a *Split-X* process, or segregated process.

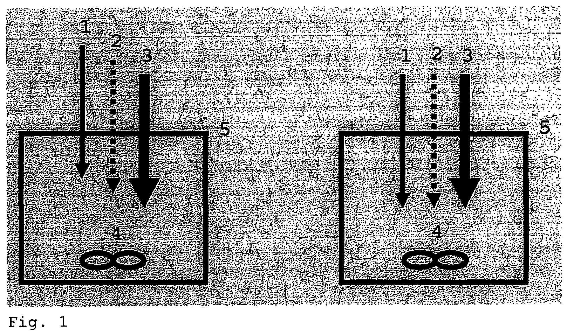

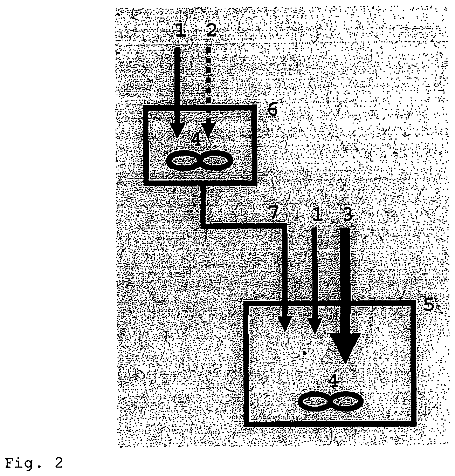

Figs. 1 and 2 show the difference between the conventional process and the *Split-X* process.

The *Split-X* process is also differentiated from other processes encountered in the prior art in that the zeolite does not undergo additional treatments such as filtration, washing or calcination after the treatment with its activator.

The additives prepared by the method described in this invention display higher yields of LPG, ethene, propene and butene than the additives of the same composition prepared by other processes.

### Description of the drawings

Fig. 1 shows drawings illustrating sequences of preparation of the additive for catalysts by conventional processes and Fig. 2 shows a drawing illustrating a typical embodiment of the sequence for preparation of the additive for catalysts by the process described in the present invention. Note that in the conventional processes (Fig. 1), the mixture that is the precursor of the catalyst can be obtained sequentially in any order or simultaneously, by adding the components reagent "X" (1), zeolite (2) and other ingredients (3), such as colloidal silica or colloidal alumina and kaolin, directly to preparation tank (5) equipped with a stirrer (4). In the *Split-X* process (Fig. 2) initially the components reagent "X" (1) and zeolite (2) are added to a premixing tank (6) with stirrer (4) and then the mixture is transferred via pipeline (7) to the preparation tank (5) with stirrer (4), in which the other ingredients (3) are added simultaneously. Alternatively, more reagent "X" can be added directly to the preparation tank (5) during preparation of the suspension that is the precursor of the catalyst.

### EXAMPLES

The examples, which demonstrate how the typical additives of this invention can be prepared, are illustrations and are not intended to limit the range of the preparation parameters.

### Example 1: Preparation of additives containing stabilizer P by the Split-X process and their performance

This example demonstrates achievement of better stabilization of zeolite ZSM-5 by the *Split-X* process, using a source of phosphorus.

In the first stage of preparation of the additive, the olefin-selective zeolite with ZSM-5 type of structure, available commercially, was modified with phosphate. An aqueous suspension was prepared with 1 kg of zeolite Z (dry base) in a solution of 100g of 98% phosphoric acid diluted with 2.3 litres of water. The pH of the suspension was adjusted to 5 with concentrated ammonium hydroxide solution. The suspension was kept at room temperature for 1 hour, stirring slowly to prevent sedimentation. The zeolite suspension was designated PZ.

In the second stage of preparation of the additive, the modified zeolite was incorporated in a binding matrix. The particles were moulded, in the form of microspheres, by spray drying. In this stage, it is possible to follow one of the examples described in the patents cited in the previous section, such as patent US 5,286,369 (Grace) or patent US 5,456,821 (Mobil). A hydrosol containing a mixture of colloidal silica and colloidal alumina was prepared. The suspension of modified zeolite PZ or of starting zeolite Z was mixed with this suspension of colloidal particles and, finally, an aqueous suspension of kaolin with 30% solids and a solution of phosphoric acid (30% w/w) were added to the mixture. It should be noted that the final composition of the mixture contains phosphoric acid originating both from suspension PZ of stage 1 (segregated process, *Split-X)* and from final addition of phosphoric acid. The mixture was dried in a spray-dryer.

Table 1 summarizes the characteristics of additive A, prepared with zeolite PZ, and of the reference R, prepared with zeolite Z.

| **Table 1 - Additives prepared for Example 1** | | | | | | |
|---|---|---|---|---|---|---|
| Name of the additive | Type and content of zeolite | Chemical composition (% w/w) | | | Textural properties | |
| | | Al₂O₃ | SiO₂ | P₂O₅ | BET (m²/g) | MiPV (ml/g) |
| A | 25% PZ | 30.9 | 57.6 | 9.03 | 90.0 | 0.0298 |
| R | 25% Z | 31.3 | 57.4 | 8.69 | 90.1 | 0.0294 |

The additives were compared by means of microcatalytic tests. The additives were treated with 100% steam at 788°C for 5 hours, before the catalytic tests, to simulate their operating conditions in a commercial FCC unit. Each treated additive was mixed with an equilibrium catalyst E (E-cat) obtained from a commercial unit, at a weight ratio of 6% of additive to 94% of E-cat. This assessment was carried out using an ACE laboratory unit (made by Kayser Technology, patent US 6,069,012).

The cracking stock used has the properties shown in Table 2.

| **Table 2 - Characteristics of the stock for the microcatalytic test** | |
|---|---|
| °API | 19.2 |
| Density | 0.935 |
| Aniline point (°C) | 83.3 |
| Total sulphur (% w/w) | 0.57 |
| Total nitrogen (ppm) | 2835 |
| Basic nitrogen (ppm) | 854 |
| RCR (%) | 0.55 |

Table 3 shows the most significant results of the test. It can be seen that additive A was more effective than reference R tested in the same conditions, producing more light olefins and LPG, confirming the advantage of the method of preparation of the Split-X process. (In this case, it can be designated as *Split-P*).

| **Table 3-Results of the catalytic test at 535°C** | | | |
|---|---|---|---|
| Samples | 100% E | 94% E + 6% R | 94% E + 6% A |
| Conversion at catalyst/oil = 5 (%) | 58.6 | 59.5 | 58.6 |

| Normalized yields for conversion=63% (% w/w) | | | |
|---|---|---|---|
| Fuel Gas | 2.8 | 2.8 | 2.8 |
| LPG | 12.3 | 16.0 | 16.4 |
| Propene | 3.5 | 5.0 | 5.5 |
| Gasoline | 40.7 | 36.9 | 37.0 |
| LCO | 20.1 | 18.4 | 19.7 |
| Bottoms | 16.9 | 18.6 | 17.4 |
| Coke | 7.1 | 7.5 | 6.7 |

### Example 2: Preparation and testing of additive containing P-ZSM-5 (comparative example).

This example demonstrates the advantage of stabilization of zeolite ZSM-5 by the process with *Split* stage over stabilization *ex-situ.*

A commercial zeolite ZSM-5 was modified by the method of stabilization *ex*-*situ*, as described in publication EP 1116775 A1. An aqueous suspension was prepared with 1 kg of zeolite Z (dry base) in a solution of 100g of 98% phosphoric acid diluted with 2.3 litres water. The suspension was then held at room temperature for 1 hour, stirring slowly to prevent sedimentation. The zeolite suspension was dried at 120°C overnight. Finally, the dry material was calcined at 600°C for one hour. In the second stage, modified zeolite P-ZSM-5-C was incorporated in a binding matrix and then moulding of microspheres was carried out by spray drying using methodology and composition identical to those in the second stage of Example 1, thus forming additive B.

Commercial- zeolite ZSM-5 was also modified with phosphate, by the *Split-P* route, using methodology and composition identical to the first stage of Example 1. The zeolite suspension was designated PZ₂. PZ₂ was incorporated in a binding matrix and then moulding of microspheres was carried out by spray drying using methodology and composition identical to the second stage of Example 1, thus forming additive C.

Table 4 summarizes the main characteristics of additives B and C.

| **Table 4 - Additives prepared for Example 2** | | | | | | |
|---|---|---|---|---|---|---|
| Name of the additive | Type and content of zeolite | Chemical composition (% w/w) | | | Textural properties | |
| | | Al₂O₃ | SiO₂ | P₂O₅ | BET (m²/g) | MiPV (ml/g) |
| B | 25% P-ZSM5-C | 29.0 | 58.8 | 10.2 | 79.3 | 0.0285 |
| C | 25% PZ₂ | 30.1 | 59.2 | 8.73 | 78.8 | 0.0263 |

The additives were treated with 100% steam, at 788°C for 5 hours, as in Example 2. An equilibrated catalyst, E2, obtained in a commercial unit, was mixed, respectively, with the additives at a weight ratio of 4% of additive to 96% of catalyst. Using the same stock as in Example 1, additives B and C were assessed in the ACE unit described previously.

Table 5 shows that additive B, tested in the same conditions, was less effective than additive C, confirming the advantage of the *Split-P* method of preparation over stabilization *ex*-*situ*.

| **Table 5 - Conversion and yields (% w/w) at 535°C and catalyst/oil=5** | | | |
|---|---|---|---|
| Samples | 100% E2 | 96%E2 + 4%B | 96%E2 + 4%C |
| Conversion (%) | 73.3 | 69.8 | 70.9 |
| LPG | 20.1 | 21.3 | 22.5 |
| Propene | 5.4 | 6.4 | 6.8 |
| Gasoline | 52.3 | 49.5 | 49.0 |

### Example 3: Preparation of additives containing stabilizer Ca by the Split-X method (Split-Ca)

In the first stage of preparation of the additive, an olefin-selective zeolite, such as that available commercially with a structure of the type ZSM-5, was modified with alkaline-earth metals. An aqueous suspension was prepared with 1 kg of zeolite Z (dry base) and 2.4 litres of aqueous solution of calcium chlorides or nitrates at concentration 0.10 molar. The suspension was held at 80°C for 2 hours, stirring slowly to prevent sedimentation. The zeolite suspension was designated CaZ₁. This operation was repeated with double and with triple the concentration of Ca, generating zeolite suspensions CaZ₂ and CaZ₃, respectively.

In the second stage the modified zeolite was incorporated in a binding matrix and then moulding of microspheres was carried out by spray drying. In this stage, it is possible to follow one of the examples described in the patents cited previously, such as patent US 5,286,369 (Grace) or patent US 5,456,821 (Mobil).

Thus, a hydrosol was prepared containing a mixture of colloidal silica and colloidal alumina. The suspension of modified zeolite (CaZₙ, n = 1, 2 or 3) was mixed with this suspension of colloidal particles, and finally an aqueous suspension of kaolin with 30% solids and phosphoric acid (30% w/w) were added to the mixture. Then the mixture was dried in a spray-dryer.

Table 6 summarizes the additives prepared and their main characteristics. The additives prepared are compared with reference R prepared in Example 1.

Before the catalytic test, the additives were treated with 100% steam at 788°C for 5 hours, to simulate the operating conditions in a commercial FCC unit. Each additive treated was mixed, respectively, with the equilibrium catalyst E (E-cat) obtained in a commercial unit, at a weight ratio of 6% of additive to 94% of E-cat. The additives were assessed in the ACE unit using the same stock as in Example 1.

| **Table 6 - Additives prepared for Example 3** | | | | | | |
|---|---|---|---|---|---|---|
| Name of the additive | Type and content of zeolite | Chemical composition (% w/w) | | | Textural properties | |
| | | Al₂O₃ | SiO₂ | P₂O₅ | BET (m²/g) | MiPV (ml/g) |
| D | 25% CaZ₁ | 31.0 | 57.4 | 8.98 | 87.4 | 0.0298 |
| F | 25% CaZ₂ | 31.2 | 57.2 | 9.13 | 88.7 | 0.0296 |
| G | 25% CaZ₃ | 31.4 | 57.1 | 9.05 | 90.0 | 0.0289 |

Table 7 summarizes the most important results of the test. It can be seen that the additives containing CaZ are more selective for propene, LPG and produce lower content of gasoline relative to the reference additive R.

| **Table 7 - Results of the catalytic test at 535°C** | | | | | |
|---|---|---|---|---|---|
| Samples | 100% E | 94% E + 6% R | 94% E + 6% D | 94% E + 6% F | 94% E + 6% G |
| Conversion at catalyst/oil=5 (%) | 58.6 | 59.5 | 60.1 | 59.6 | 58.9 |

| **Yields normalized for 63% conversion (% w/w)** | | | | | |
|---|---|---|---|---|---|
| Fuel gas | 2.8 | 2.8 | 2.9 | 2.8 | 2.9 |
| LPG | 12.3 | 16.0 | 16.2 | 16.7 | 16.3 |
| Propene | 3.5 | 5.0 | 5.6 | 5.4 | 5.4 |
| Gasoline | 40.7 | 36.9 | 36.6 | 36.7 | 36.6 |
| LCO | 20.1 | 18.4 | 18.2 | 19.3 | 19.3 |
| Bottoms | 16.9 | 18.6 | 18.8 | 17.8 | 17.7 |
| Coke | 7.1 | 7.5 | 7.3 | 6.8. | 7.2 |

### Example 4: This example demonstrates the importance of the Split stage (comparative example)

If the previous stage of contact of the zeolite with the stabilizer is omitted and the reagents are then mixed, no significant improvement of the additive is observed relative to the reference additive. The performance is poorer than the additive of the same composition (F) prepared by the *Split-Ca* method described in Example 3.

Thus, additive H was prepared by the alternative method. A suspension was prepared with 1 kg of zeolite Z (dry base) in 2.4 litres of aqueous solution of calcium chloride of concentration 0.20 molar.

Immediately thereafter, phosphoric acid, the silica hydrosol, alumina and kaolin were added to this suspension, to obtain a final composition identical to additive F. The mixture was then dried in the spray-dryer.

This additive was treated with 100% steam at 788°C for 5 hours, as in Example 1, to simulate the state of equilibrium. Then it was mixed with the equilibrium catalyst E (E-cat), obtained from a commercial unit, at a weight ratio of 6% of additive to 94% of E-cat. Using the same stock as in Example 2, additive H was assessed in the ACE unit also described in Example 1.

The results presented in Table 8 show that additive H was less effective than additive F, tested in the same conditions.

| **Table 8 - Conversion and yields (% w/w) at 535°C and catalyst/oil=5** | | | | |
|---|---|---|---|---|
| Samples | 100% E | 94% E + 6% R | 94% E + 6% F | 94% E + 6% H |
| Conversion at catalyst/oil=5 (%) | 58.6 | 59.5 | 59.6 | 58.9 |

| **Yields normalized for 63% conversion (% w/w)** | | | | |
|---|---|---|---|---|
| LPG | 12.3 | 16.0 | 16.7 | 15.7 |
| Propene | 3.5 | 5.0 | 5.4 | 5.1 |
| Gasoline | 40.7 | 36.9 | 36.7 | 37.8 |
| LCO | 20.1 | 18.4 | 19.3 | 19.6 |
| Bottoms | 16.9 | 18.6 | 17.8 | 17.7 |

In fact, in this comparison, the yield of LPG obtained using additive H is already below the yield obtained when using reference additive R. Table 9 shows the properties of additive H.

| **Table 9 - Additive prepared for Example 4** | | | | | | |
|---|---|---|---|---|---|---|
| Name of the additive | Type and content of zeolite | Chemical composition (% w/w) | | | Textural properties | |
| | | Al₂O₃ | SiO₂ | P₂O₅ | BET (m²/g) | MiPV (ml/g) |
| H | 25% Z | 31.3 | 57.1 | 9.08 | 92.4 | 0.0294 |

## Claims

1. Process for the production of additive for catalysts for fluid catalytic cracking (FCC), **characterized in that** it comprises the following stages:
1) provide a suspension of zeolite that is selective for light olefins;
2) bring a modifying agent, reagent "X", in contact with the suspension of zeolite that is selective for light olefins from step (1);
3) provide a hydrosol of inorganic oxide;
4) mix the hydrosol from step (3) with the zeolite suspension from step (2);
5) dry the suspension resulting from step (4) in a spray-dryer;
wherein said reagent "X" is an aqueous solution of cations of aluminium or of alkaline-earth metal in the presence of phosphate.

2. Process according to Claim 1, **characterized in that** said zeolite that is selective for light olefins is a zeolite ZSM-5.

3. Process according Claim 1 or 2, **characterized in that** said reagent "X" is an aqueous solution of calcium or magnesium cations in the presence of phosphate.

4. Process according to any preceding Claim, **characterized in that** the percentage by weight of cations of aluminium or of alkaline-earth metal relative to zeolite, expressed in the form of oxide, is up to 10%, more preferably up to 4%, and most preferably up to 2%.

5. Process according to any preceding Claim, **characterized in that** the percentage by weight of phosphate relative to zeolite, expressed in the form of phosphorus pentoxide (P₂O₅), is up to 20%, preferably up to 15%, and more preferably up to 10%.

6. Process according to any preceding Claim, **characterized in that** the duration of contact between the zeolite that is selective for light olefins and the modifying agent reagent "X" is between 0.25 hours and 10 hours, preferably between 0.5 hours and 4 hours.

7. Process according to any preceding Claim, **characterized in that** the temperature for mixing the zeolite suspension with the modifying agent reagent "X" is between 10°C and 100°C, preferably between 30°C and 80°C.

8. Process according to any preceding Claim, **characterized in that** said hydrosol of inorganic oxide contains one or more inorganic oxides.

9. Process according to any preceding Claim, **characterized in that** said inorganic oxides are a colloidal silica, a synthesized silica, an alumina peptized with nitric acid, a silica-alumina or a mixture combining two or more of these oxides.

10. Additive for catalysts for fluid catalytic cracking, **characterized in that** it is obtainable by a process according to any of claims 1 to 9.

## Patentansprüche

1. Verfahren zur Herstellung eines Zusatzstoffs für Katalysatoren für fluidkatalytisches Cracken (FCC), **dadurch gekennzeichnet, dass** es die folgenden Stufen umfasst:
1) Bereitstellen einer Zeolithsuspension, die für leichte Olefine selektiv ist;
2) Bringen eines Modifizierungsmittel, Reagenz "X", in Kontakt mit der Zeolithsuspension, die für leichte Olefine aus Schritt (1) selektiv ist;
3) Bereitspellen eines Hydrosols eines anorganischen Oxids;
4) Mischen des Hydrosols aus Schritt (3) mit der Zeolithsuspension aus Schritt (2);
5) Trocknen der aus Schritt (4) resultierenden Suspension in einem Sprühtrockner;
wobei das Reagenz "X" eine wässrige Lösung von Aluminium- oder Erdalkalimetallkationen in Gegenwart von Phosphat ist.

2. Verfahren nach Anspruch 1, **dadurch gekennzeichnet, dass** der für leichte Olefine selektive Zeolith ein Zeolith ZSM-5 ist.

3. Verfahren nach Anspruch 1 oder 2, **dadurch gekennzeichnet, dass** das Reagenz "X" eine wässrige Lösung von Calcium oder Magnesiumkationen in Gegenwart von Phosphat ist.

4. Verfahren nach einem der vorhergehenden Ansprüche, **dadurch gekennzeichnet, dass** der Gewichtsprozentsatz der Aluminium- oder Erdalkalimetallkationen bezogen auf Zeolith, ausgedrückt in Form von Oxid, bis zu 10 %, besonders bevorzugt bis zu 4 % und ganz besonders bevorzugt 2 % beträgt.

5. Verfahren nach einem der vorhergehenden Ansprüche, **dadurch gekennzeichnet, dass** der Gewichtsprozentsatz des Phosphats bezogen auf Zeolith, ausgedrückt in Form von Phosphorpentoxid (P₂O₅), bis zu 20 %, besonders bevorzugt bis zu 15 % und ganz besonders bevorzugt 10 % beträgt.

6. Verfahren nach einem der vorhergehenden Ansprüche, **dadurch gekennzeichnet, dass** die Kontaktdauer zwischen dem für leichte Olefine selektiven Zeolith und dem Modifizierungsmittelreagenz "X" zwischen 0,25 Stunden und 10 Stunden, bevorzugt zwischen 0,5 Stunden und 4 Stunden liegt.

7. Verfahren nach einem der vorhergehenden Ansprüche, **dadurch gekennzeichnet, dass** die Temperatur zum Mischen der Zeolithsuspension mit dem Modifizierungsmittelreagenz "X" zwischen 10 °C und 100 °C, bevorzugt zwischen 30 °C und 80 °C liegt.

8. Verfahren nach einem der vorhergehenden Ansprüche, **dadurch gekennzeichnet, dass** das Hydrosol von anorganischem Oxid ein oder mehrere anorganische Oxide enthält.

9. Verfahren nach einem der vorhergehenden Ansprüche, **dadurch gekennzeichnet, dass** die anorganischen Oxide ein kolloidales Siliciumdioxid, ein synthetisiertes Siliciumdioxid, ein mit Salpetersäure peptisiertes Aluminiumoxid, ein Siliciumdioxid-Aluminiumoxid oder eine Mischung sind, die zwei oder mehr dieser Oxide kombiniert.

10. Zusatzstoff für Katalysatoren für fluidkatalytisches Cracken, **dadurch gekennzeichnet, dass** es nach einem Verfahren gemäß einem der Ansprüche 1 bis 9 erhältlich ist.

## Revendications

1. Procédé de fabrication d'additif pour catalyseurs de craquage catalytique fluide (CCF), **caractérisé en ce qu'**il comprend les étapes suivantes :
1) la fourniture d'une suspension de zéolite qui est sélective pour les oléfines légères ;
2) la mise en contact d'un agent modificateur, le réactif « X », avec la suspension de zéolithe sélective pour les oléfines légères de l'étape (1) ;
3) la fourniture d'un hydrolat d'oxyde inorganique ;
4) le mélange de l'hydrolat de l'étape (3) avec la suspension de zéolite de l'étape (2) ;
5) le sèchement de la suspension résultant de l'étape (4) dans un atomiseur-séchoir;
dans lequel ledit réactif « X » est une solution aqueuse de cations d'aluminium ou de métal alcalino-terreux en présence de phosphate.

2. Procédé selon la revendication 1, **caractérisé en ce que** ladite zéolithe sélective pour les oléfines légères est une zéolithe ZSM-5.

3. Procédé selon la revendication 1 ou 2, **caractérisé en ce que** ledit réactif « X » est une solution aqueuse de cations calcium ou magnésium en présence de phosphate.

4. Procédé selon l'une quelconque des revendications précédentes, **caractérisé en ce que** le pourcentage en poids de cations d'aluminium ou de métal alcalino-terreux par rapport à la zéolithe, exprimé sous forme d'oxyde, est jusqu'à 10%, préférentiellement jusqu'à 4%, et plus préférentiellement jusqu'à 2%.

5. Procédé selon l'une quelconque des revendications précédentes, **caractérisé en ce que** le pourcentage en poids de phosphate par rapport à la zéolithe, exprimé sous forme de pentoxyde de phosphore (P₂O₅), va jusqu'à 20%, préférentiellement jusqu'à 15%, et plus préférentiellement jusqu'à 10%.

6. Procédé selon l'une quelconque des revendications précédentes, **caractérisé en ce que** la durée de contact entre la zéolithe sélective des oléfines légères et l'agent réactif modificateur « X » est comprise entre 0,25 heure et 10 heures, de préférence entre 0,5 heure et 4 heures.

7. Procédé selon l'une quelconque des revendications précédentes, **caractérisé en ce que** la température de mélange de la suspension de zéolithe avec l'agent réactif modificateur « X » est comprise entre 10 °C et 100 °C, de préférence entre 30 °C et 80 °C.

8. Procédé selon l'une quelconque des revendications précédentes, **caractérisé en ce que** ledit hydrolat d'oxyde inorganique contient un ou plusieurs oxydes inorganiques.

9. Procédé selon l'une quelconque des revendications précédentes, **caractérisé en ce que** lesdits oxydes inorganiques sont une silice colloïdale, une silice synthétisée, une alumine peptisée avec de l'acide nitrique, une silice-alumine ou un mélange associant deux ou plusieurs de ces oxydes.

10. Additif pour catalyseurs de craquage catalytique fluide, **caractérisé en ce qu'**il peut être obtenu par un procédé selon l'une quelconque des revendications 1 à 9.
